(19) Europäisches Patentamt
European Patent Office
Office européen des brevets

(11) Publication number: 0 233 186 B1

(12) EUROPEAN PATENT SPECIFICATION

(45) Date of publication of patent specification: 23.05.90

(51) Int. Cl.[5]: C 08 K 5/43

(21) Application number: 86900683.3

(22) Date of filing: 24.07.85

(86) International application number:
PCT/US85/01396

(87) International publication number:
WO 87/00542 29.01.87 Gazette 87/03

# (54) CARBONATE POLYMER COMPOSITION.

(43) Date of publication of application:
26.08.87 Bulletin 87/35

(45) Publication of the grant of the patent:
23.05.90 Bulletin 90/21

(84) Designated Contracting States:
AT BE CH DE FR GB IT LI NL SE

(56) References cited:
FR-A-2 154 783
US-A-4 208 489
US-A-4 223 100
US-A-4 254 015
US-A-4 366 276
US-A-4 510 196
US-A-4 626 563

(73) Proprietor: THE DOW CHEMICAL COMPANY
2030 Dow Center Abbott Road P.O. Box 1967
Midland Michigan 48640-1967 (US)

(72) Inventor: OGOE, Samuel, A.
308 Linden Street
Angleton, TX 77515 (US)

(74) Representative: Huber, Bernhard, Dipl.-Chem. et al
Patentanwälte H. Weickmann, Dr. K. Fincke F.A. Weickmann, B. Huber Dr. H. Liska, Dr. J. Prechtel
Möhlstrasse 22 Postfach 860 820
D-8000 München 86 (DE)

EP 0 233 186 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to carbonate polymer compositions containing an additive which acts as a flame retardant together with an additive which improves processing stability.

It is known from U.S. 4,201,382 that various metallic salts can be used as fillers for polycarbonate compositions. However, these salts are used in substantial amounts as fillers and do not have the requisite pka value to be useful in this invention.

Carbonate polymers derived from reactions of dihydroxyorganic compounds, particularly the dihydric phenols, and carbonic acid derivatives such as phosgene, have found extensive commercial application because of their excellent physical properties. These thermoplastic polymers are suitable for the manufacture of molded parts wherein impact strength, rigidity, toughness, heat resistance, and excellent electrical properties are required.

Unfortunately, however, these polymers exhibit a brief but definite burning time when contacted with an open flame. More importantly, as is often the case, the carbonate polymers contain stabilizers and other additives which are often more combustible than the unmodified carbonate polymer. As a result, the modified carbonate polymers frequentyly exhibit substantially poorer resistance to combustion than does the unmodified carbonate polymer.

In attempts to increase the combustion resistance of carbonate polymers including the modified forms thereof, it has been a common practice to employ monomeric phosphites, phosphoric acid esters, thiophosphoric acid esters containing halogenated alkyl radicals and halogenated organic compounds into the carbonate polymer. However, in order to obtain any noticeable improvement in combustion resistance, these additives have been employed in such large quantities that they often adversely affect many of the desirable physical and mechanical properties of the carbonate polymer.

The use of aromatic sulfimides as flame retardants in carbonate polymers is suggested in U.S. Patent 4,254,015 granted March 3, 1981. However, it was found that while these additives are efficient as flame retardants, they also adversely effect the processing stability of the carbonate polymers. In other words, during melt processing, such as extruding into pellets, there is a considerable lowering of the molecular weight.

The use of metal salts of inorganic acids such as sodium bisulfate as flame retardants is suggested in U.S. Patent 4,486,560 granted December 4, 1984. U.S. Patent 4,510,196 discloses polycarbonate compositions containing powdered sulfates to improve the processability.

The present invention is a carbonate polymer composition comprising a carbonate polymer having dispersed therein a metal salt of an aromatic sulfimide and a metal sulfate or bisulfate having a pka from 1 to 5 inclusive whereby the sulfimide is used to provide improved flame retardancy and the sulfate or bisulfate is used to provide increased processing stability. Hereinafter, such compositions will be referred to as fire retardant carbonate polymer compositions and they exhibit surprisingly high resistance to combustion. In addition, the compositions exhibit physical properties comparable to a carbonate polymer containing no fire retardant additive.

The fire retardant carbonate polymer compositions of the present invention are suitably employed in most applications in which opaque polycarbonates have been previously utilized. Applications of particular interest for the utilization of the carbonate polymer compositions of this invention are pigmented and/or colored carbonate polymers useful as: automobile parts, e.g., air filters, fan housings, exterior components, housings for electrical motors, appliances, business and office equipment, photographic equipment, and aircraft applications.

The carbonate polymers employed in the present invention are advantageously aromatic carbonate polymers such as the trityl diol carbonates described in U.S. Patent Nos. 3,036,036, 3,036,037, 3,036,038 and 3,036,039, polycarbonates of bis(ar-hydroxyphenyl)-alkylidenes (often called bisphenol-A diols) including their aromatically and aliphatically substituted derivatives such as disclosed in U.S. Patent Nos. 2,999,835, 3,038,365 and 3,334,154, and carbonate polymers derived from other aromatic diols such as described in U.S. Patent No. 3,169,121.

It is understood, of course, that the polycarbonate may be derived from (1) two or more different dihydric phenols or (2) a dihydric phenol and a glycol or a hydroxy- or acid-terminated polyester or a dibasic acid in the event a carbonate copolymer or interpolymer rather than a homopolymer is desired. Also suitable for the practice of this invention are blends of any one of the above carbonate polymers. Also included in the term "carbonate polymer" are the ester/carbonate copolymers of the types described in U.S. Patent Nos. 3,169,121, 4,287,787, 4,156,069, 4,260,731 and 4,105,633. Of the aforementioned carbonate polymers, the polycarbonates of bisphenol-A and derivatives, including copolycarbonates of bisphenol-A, are preferred. Methods for preparing carbonate polymers for use in the practice of this invention are well known, for example, several suitable methods are disclosed in the aforementioned patents.

The salt form of aromatic sulfimides which are employed herein are advantageously represented by the formula:

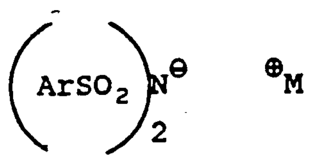

or

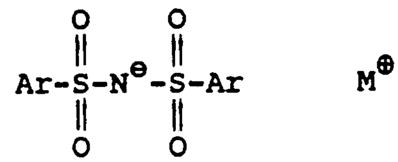

wherein Ar is an aromatic or substituted aromatic group, M is a suitable cation such as a metal cation. M is preferably an alkali metal such as sodium or potassium. Alternatively, M is a divalent cation, preferably alkaline earth or multivalent cation obtained from, for example, copper, aluminum, or antimony. Representative preferred sulfimide salts include the alkali metal salts of saccharin, N-(p-tolylsulfonyl)-p-toluenesulfimide, N-(N'-benzylaminocarbonyl)sulfanilimide, N-(phenylcarbonyl)-sulfanilimide, N-(2-pyrimidinyl)-sulfanilimide, N-(2-thiazolyl)sulfanilimide and other salts of the sulfimides disclosed in U.S. Patent No. 4,254,015. Combinations of the above-identified salts can also be employed.

The processing additives are metal bisulfates or sulfates having a pka from 1 to 5 and preferably 1 to 3. Examples of useful metal bisulfates or sulfates are sodium bisulfate, potassium bisulfate, lithium bisulfate, rubidium bisulfate, cesium bisulfate, and aluminum sulfate.

The fire retardant carbonate polymer compositions of the present invention are suitably prepared by combining the carbonate polymer with the fire retardant additive and the processing additive using any of a variety of blending procedures conventionally employed for incorporating additives into carbonate polymer resins. For example, dry particulates of the carbonate polymer and the additives can be dry blended and the resulting dry blend extruded into the desired shape.

The amounts of the fire retardant additive are in the range from 0.001 to 10 percent, especially from 0.005 to 2 weight percent based on the weight of the carbonate polymer.

The amount of the metal sulfate or bisulfate used to provide increased processing stability is from 0.001 to 1.0 weight percent based on the carbonate polymer. The preferred range is from 0.01 to 0.1% percent by weight.

In addition to the aforementioned fire retardant additives, other additives can be included in the carbonate polymer composition of the present invention such as fillers (i.e., a tetrafluoroethylene polymer or glass fibers), pigments, dyes, antioxidants, heat stabilizers, ultraviolet light absorbers, mold release agents and other additives commonly employed in carbonate polymer compositions.

The following examples are given to further illustrate the invention and should not be construed as limiting its scope. In the following examples, all parts and percentages are by weight unless otherwise indicated.

### Example 1

A polycarbonate formulation containing 0.03% and 0.02% by weight of potassium para-tolylsulfimide (KpTSM) and potassium bisulfate ($KHSO_4$) respectively is prepared by mixing a bisphenol A polycarbonate resin having a molecular weight of about 31,000 with the additives for about 45 minutes on a Hobart mixer. The formulated sample is dried for 3 hours at 125°C (257°F). The dried sample is extruded to pellets at 329°C (625°F). The extruded pellets are redried in a forced draft oven for 3 hours at 125°C (257°F). A portion of the dried sample is subjected to melt shearing at 282°C (540°F) by torque rheometer over a 30 minute time period (see Table I). The remainder of the sample is injection molded at 302°C (575°F) into bars for flammability tests (see Table II).

Modified flammability polycarbonate without potassium bisulfate as well as heat stabilized polycarbonate are similarly prepared and evaluated as controls. All the controls and the examples contained 0.1% by weight of a diphosphonite stabilizer "P—EPQ" from Sandoz (U.S. 3,825,629) and 0.05% by weight of a hindered phenolic stabilizer "Irganox 1076" from Geigy Chemical Corporation (U.S. 3,330,859).

Molecular weight by size exclusion chromatography is measured and compared to the original sample. By this test, it can be deduced to that the greater the drop in molecular weight, the less stable the polymer to high temperature melt processing. See the following tables:

TABLE I

| Sample | Torque, Meter-Grams (N·M) Initial | Final | Torque Change |
|---|---|---|---|
| Control 1 (Heat stabilized Polymer) | 625 (6.13) | 510 (5.00) | 115 (1.13) |
| Control 2 (Control 1 with 0.03% KpTSM) | 590 (5.79) | 365 (3.58) | 225 (2.21) |
| Example 1 (Control 1 with 0.03% KpTSM/0.02% $KHSO_4$) | 560 (5.49) | 470 (4.61) | 90 (0.88) |

TABLE II

| Sample | Molecular Weight ($\bar{M}w$) Initial | Final | $\bar{M}w$ Change |
|---|---|---|---|
| Control 1 | 31200 | 28700 | 2500 |
| Control 2 | 29600 | 24400 | 5200 |
| Example 1 | 29700 | 27000 | 2700 |

Table II shows that modified flammability polycarbonate with 0.02% $KHSO_4$ has significantly improved melt processing stability over the sample without $KHSO_4$ (2). Table I shows decreased torque change when the sample with $KHSO_4$ is subjected to melt shearing at 282°C by torque rheometer for 30 minutes.

TABLE III

Flammability Tests

| Sample | UL-94 | % L.O.I. |
|---|---|---|
| Control 1 | V-2 | 30.5 |
| Control 2 | V-0 | 41.0 |
| Example 1 | V-0 | 40.0 |

The UL-94 and Limiting Oxygen Indexc (L.O.I.) tests in Table III show no significant change between the sample with $KHSO_4$ and the one without $KHSO_4$.

Example 2

Procedure in Example 1 was repeated except that 0.06% KPTSM and 0.04% $KHSO_4$ buffer were incorporated. The results are as follows:

TABLE IV

| Sample | Molecular Weight (Mw) Initial | Final | Mw Change |
|---|---|---|---|
| Control 1 (Heat Stabilized polymer) | 27400 | 25200 | 2200 |
| Control 3 (Control 1 with 0.06% KPTSM) | 28000 | 23000 | 5000 |
| Example 2 (Control 1 with 0.06% KPTSM/ 0.04% $KHSO_4$) | 27300 | 25200 | 2100 |

TABLE V

| Sample | Torque, Meter - Grams (N·M) Initial | Final | Torque Change |
|---|---|---|---|
| Control 1 | 640 (6.28) | 545 (5.34) | 95 (0.94) |
| Control 3 | 440 (4.31) | 260 (2.55) | 180 (1.76) |
| Example 2 | 460 (4.51) | 390 (3.82) | 70 (0.69) |

Tables II and IV show that increasing the concentrations of both KPTSM and $KHSO_4$ do not have any adverse effect on the processing stability of the polymer. Similarly, Tables I and V do not show significant torque change regardless of the difference in KPTSM/$KHSO_4$ levels.

TABLE VI

Flammability Tests

| Sample | UL-94 | % LOI |
|---|---|---|
| Control 1 | V-2 | 29.5 |
| Control 3 | V-0 | 41.0 |
| Example 2 | V-0 | 40.0 |

Table VI indicates that using higher levels of $KHSO_4$ buffer do not significantly affect the modified flammability properties of the polycarbonate.

Examples 3 and 4

The procedure of Example 1 was repeated except that 0.06% KPTSM, 0.05% $KHSO_4$ and 0.05% $Al_2(SO_4)_3$ were incorporated.

The results are shown in Tables VI—VIII.

TABLE VI

| Sample | Molecular Weight (Mw) Initial | Final | Mw Change |
|---|---|---|---|
| Control 1 (Heat stabilized polymer) | 27400 | 25200 | 2200 |
| Control 3 (Control 1 with 0.06% KPTSM) | 28000 | 23000 | 5000 |
| Example 3 (Control 1 with 0.06% KPTSM/0.05% $KHSO_4$) | 27300 | 25300 | 2000 |
| Example 4 (Control 1 with 0.06% KPTSM/0.05% $Al_2(SO_4)_3$) | 27700 | 25700 | 2000 |

TABLE VII

| Sample | Torque, Meter - Grams (N·M) Initial | Final | Torque Change |
|---|---|---|---|
| Control 1 | 640 (6.28) | 545 (5.34) | 95 (0.94) |
| Control 3 | 440 (4.31) | 260 (2.55) | 180 (1.76) |
| Example 3 | 460 (4.51) | 400 (3.92) | 60 (0.59) |
| Example 4 | 450 (4.41) | 410 (4.02) | 40 (0.39) |

TABLE VIII

Flammability Tests

| Sample | UL-94 | % LOI |
|---|---|---|
| Control 1 | V-2 | 30.5 |
| Control 3 | V-0 | 40.0 |
| Example 3 | V-0 | 40.0 |
| Example 4 | V-0 | 40.0 |

**Claims**

1. A carbonate polymer composition comprising a carbonate polymer having dispersed therein a metal salt of an aromatic sulfimide and a metal sulfate or bisulfate having a pka from 1 to 5 inclusive, and wherein the sulfimide is present in an amount from 0.001 to 10 weight percent and the metal sulfate or bisulfate is

present in an amount from 0.001 to 1.0 weight percent, based on the weight of the carbonate polymer.

2. The composition of claim 1 wherein the metal salt of an aromatic sulfimide is represented by the formula:

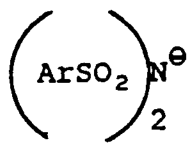 $^{\oplus}M$ or 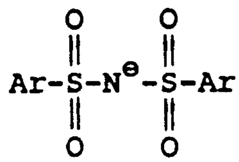 $M^{\oplus}$

wherein Ar is an aromatic or substituted aromatic group, M is a metal cation.

3. The composition of claim 2 wherein M is a metal cation selected from the group consisting of sodium, potassium, lithium, rubidium, cesium, calcium, magnesium, strontium, copper, aluminum and antimony.

4. The composition of claim 1 wherein the metal sulfate or bisulfate is selected from the group consisting of sodium bisulfate, potassium bisulfate, lithium bisulfate, rubidium bisulfate, cesium bisulfate, and aluminum sulfate.

5. The composition of any of claims 1 to 4 wherein the sulfimide is present in an amount from 0.005 to 2 weight percent based on the weight of the carbonate polymer.

6. The composition of any of claims 1 to 4 wherein the metal sulfate or bisulfate is present in an amount from 0.01 to 0.1 weight percent based on the weight of the carbonate polymer.

7. The composition of any of the preceding claims wherein the carbonate polymer is a polycarbonate of bisphenol-A, and the sulfimide comprises the alkali metal salt of N-(p-tolylsulfonyl)-p-toluenesulfimide and the bisulfate or sulfate is a member of the group consisting of an alkali metal bisulfate and aluminum sulfate.

**Patentansprüche**

1. Carbonatpolymer-Zusammensetzung, enthaltend ein Carbonatpolymer aund darin dispergiert ein Metallsalz eines aromatischen Sulfimids und ein Metallsulfat oder Bisulfat mit einem pKa von 1 bis einschließlich 5 und worin das Sulfimid in einer Menge von 0,001 bis 10 Gew.-% vorliegt und das Metallsulfat oder Bisulfat in einer Menge von 0,001 bis 1,0 Gew.-% vorliegt bezogen auf das Gewicht des Carbonatpolymers.

2. Zusammensetzung nach Anspruch 1, worin das Metallsalz eines aromatisches Sulfimids dargestellt ist durch die Formel

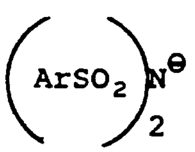 $^{\oplus}M$ oder 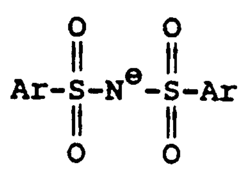 $M^{\oplus}$

worin Ar eine aromatische oder substituierte aromatische Gruppe ist und M ein Metallkation ist.

3. Zusammensetzung nach Anspruch 2, worin M ein Metallkation, ausgewählt aus der Gruppe, bestehend aus Natium, Kalium, Lithium, Rubidium, Cäsium, Calcium, Magnesium, Strontium, Kupfer, Aluminium und Antimon ist.

4. Zusammensetzung nach Anspruch 1, worin das Metallsulfat oder Bisulfat aus der Gruppe, besethend aus Natriumbisulfat, Kaliumbisulfat, Lithiumbisulfat, Ribudiumbisulfat, Cäsiumbisulfat und Aluminiumsulfat ausgewählt ist.

5. Zusammensetzung nach einem der Ansprüche 1 bis 4, worin das Sulfimid in einer Menge von 0,005 bis 2 Gew.-% bezogen auf das Gewicht des Carbonatpolymers vorliegt.

6. Zusammensetzung nach einem der Ansprüche 1 bis 4, worin das Metalsulfat oder Bisulfat in einer Menge von 0,01 bis 0,01 Gew.-% bezogen auf das Gewicht des Carbonatpolymers vorliegt.

7. Zusammensetzung nach einem der vorhergehenden Ansprüche, worin das Carbonatpolymer ein Polycarbonat von Bisphenol-A ist, und das Sulfimid das Alkalimetallsalz von N-(p-tolylsulfonyl)-p-toluolsulfimid enthält, und das Bisulfat oder Sulfat ein Mitglied der Gruppe, bestehend aus einem Alkalimetallbisulfat und Aluminiumsulfat ist.

**Revendications**

1. Composition de polycarbonate comprenant un polycarbonate dans lequel sont dispersés un sel métallique d'un sulfimide aromatique et un sulfate ou un bisulfate métallique ayant un pKa de 1 à 5, bornes comprises, et dans laquelle le sulfimide est présent en une quantité de 0,001 à 10% en poids et le sulfate ou

le bisulfate métallique est présent en une quantité de 0,001 à 1,0% en poids, par rapport au poids du polycarbonate.

2. Composition selon la revendication 1, dans laquelle le sel métallique d'un sulfimide aromatique est représenté par la formule:

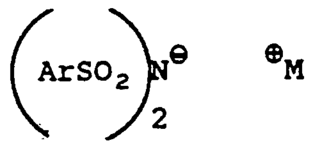

ou

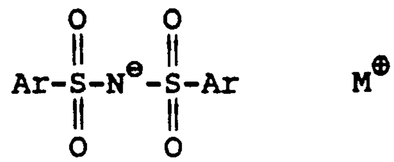

dans laquelle Ar est un groupe aromatique ou aromatique substitué, M est un cation métallique.

3. Composition selon la revendication 2, dans laquelle M est un cation métallique choisi dans le group constitué par le sodium, le potassium, le lithium, le rubidium, le césium, le calcium, le magnésium, le strontium, le cuivre, l'aluminium et l'antimoine.

4. Composition selon la revendication 1, dans laquelle le sulfate ou le bisulfate métallique est choisi dans le groupe constitué par le bisulfate de sodium, le bisulfate de potassium, le bisulfate de lithium, le bisulfate de rubidium, le bisulfate de césium et le sulfate d'aluminium.

5. Composition selon l'une quelconque des revendications 1 à 4, dans laquelle le sulfimide est présent en une quantité de 0,005 à 2% en poids, par rapport du polycarbonate.

6. Composition selon l'une quelconque des revendications 1 à 4, dans laquelle le sulfate ou le bisulfate métallique est présent en une quantité de 0,01 à 0,1% en poids, par rapport au poids du polycarbonate.

7. Composition selon l'une quelconque des revendications précédentes, dans laquelle le polycarbonate est un polycarbonate de bisphénol-A, et le sulfimide comprend le sel de métal alcalin de N-(p-tolylsulfonyl)-p-toluènesulfimide et le bisulfate ou le sulfate est un élément du groupe constitué par un bisulfate de métal alcalin et le sulfate d'aluminium.